**Europäisches Patentamt**

**European Patent Office**

**Office européen des brevets**

(11) Numéro de publication: **0015871**
**A1**

(12) # DEMANDE DE BREVET EUROPEEN

(21) Numéro de dépôt: **80810062.2**

(22) Date de dépôt: **20.02.80**

(51) Int. Cl.³: **B 29 C 27/08,** A 41 D 27/24

(30) Priorité: **22.02.79 CH 1771/79**

(43) Date de publication de la demande: **17.09.80**
**Bulletin 80/19**

(84) Etats contractants désignés: **AT BE CH DE FR GB IT LU NL SE**

(71) Demandeur: **BATTELLE DEVELOPMENT CORPORATION, 505 King Avenue, Columbus Ohio 43201 (US)**

(72) Inventeur: **Zurcher, Erwin, 21, Avenue du Lignon, CH-1219 Le Lignon (CH)**

(74) Mandataire: **Dousse, Blasco et al, 7, route de Drize, CH-1227 Carouge/Genève (CH)**

(54) **Soudage d'un matériau textile et procédé de soudage de ce matériau.**

(57) Ce soudage d'un matériau en nappe présente des zones de soudage dont la masse est supérieure à 80 % de la masse des zones correspondantes des nappes et dont la résistance au cisaillement est supérieur à 10 % de la résistance à la traction des nappes et la résistance au pelage est supérieur à 5 % de cette même résistance. Le procédé de soudage par ultrasons consiste à transmettre les ultrasons aux portions de matériau à souder par l'intermédiaire d'un matériau thermiquement isolant, en particulier un matériau en feuille tel qu'une feuille de papier interposée entre une enclume, respectivement une sonotrode de soudage et le matériau textile.

Ce procédé est applicable à tous les matériaux textiles présentant plus de 50 % de fibres en matière thermoplastique.

0015871

SOUDAGE D'UN MATERIAU TEXTILE
ET PROCEDE DE SOUDAGE DE CE MATERIAU

Les étoffes formées en totalité ou en partie de fils de matières synthétiques thermoplastiques, peuvent être soudées l'une à l'autre au lieu d'être cousues. A cet effet, une technique appropriée est celle du soudage par ultrasons, du fait qu'elle permet de faire fondre les fils du tissu très localement à l'endroit précis où l'on veut souder, la température la plus élevée se situant aux points de contact, c'est-à-dire à l'endroit même où la matière doit être ramollie en vue du soudage réalisé consécutivement au refroidissement de cette matière ainsi ramollie.

La résistance mécanique de ces soudures est cependant relativement faible étant donné que la fusion du tissu en matière plastique à l'endroit de la soudure constitue une solution de continuité de la structure textile et de ce fait une amorce de rupture des fibres. C'est la raison pour laquelle ce type de liaison de tissu n'est guère utilisé à l'heure actuelle que pour des tissus relativement épais, de l'ordre de 200 $g/m^2$ ou plus et pour des parties de vêtement où le tissu n'est pas susceptible d'être soumis à des efforts importants, ce qui limite fortement les possibilités d'application de ce procédé de liaison de tissu. Or, ce procédé présente un intérêt certain compte tenu de sa rapidité et du gros avantage que constitue le fait d'assembler deux bords de tissu sans apport de matière, ce qui améliore le confort, comme par exemple pour la fermeture de la pointe d'un bas où le bourrelet résultant de la couture est gênant. Il offre de ce fait, dans l'avenir, des perspectives prometteuses, pour autant que la résistance de la soudure soit améliorée.

Or, dans le cas de tissus très fins, comme les tissus de bas qui se situent généralement au-dessous de 100 à 150 $g/m^2$ même dans

les parties renforcées, la résistance des soudures réalisées par ultrasons est extrêmement faible et en tout cas insuffisante pour résister aux sollicitations auxquelles elles sont soumises. C'est la raison pour laquelle le soudage de tissus fins, faits de matériaux thermoplastiques n'est pas utilisé industriellement.

Il est difficile, encore à l'heure actuelle d'expliquer les raisons pour lesquelles, la résistance de ces soudures est si faible. Toutefois, certains éléments de réponse apparaissent peu à peu. C'est ainsi que l'on constate généralement que la rupture de deux nappes textiles soudées par ultrasons ne se produit pas dans la zone soudée, mais au bord de cette zone. On peut alors admettre que la zone de soudage ne participe pas directement à la résistance aux sollicitations du fait que la résistance du tissu est considérablement réduite autour des zones de soudage. Pour effectuer le soudage de deux nappes de tissus par ultrasons, il est nécessaire de serrer ces deux nappes entre une enclume et une sonotrode pour communiquer des variations de pression à fréquence ultrasoniques à ces nappes. Il est vraisemblable que la pression exercée alors que la matière est chauffée à une température suffisante pour provoquer le thermosoudage est la cause d'une amorce de rupture autour de la zone de soudage. Les essais de soudage réalisés avec une pression réduite ont montré l'impossibilité de réaliser la soudure, même en augmentant la durée d'application des ultrasons.

Cette particularité du soudage de matière textile a déjà été utilisée dans le brevet US 3949127 pour réaliser un non-tissé ajouré en soudant les filaments formant le non-tissé en de multiples zones et en étirant le tissu pour rompre les zones intensément fondues de la périphérie de ces zones où les filaments sont soudés les uns aux autres. Comme dans le cas de la soudure de deux tissus, la rupture intervient autour de la zone intensément fondue. Il s'agit simplement dans ce brevet d'utiliser cette particularité dans une application spéciale qui n'a rien à voir avec le soudage de deux nappes textiles.

Au contraire, le brevet GB 1092 052 propose de remédier à cet inconvénient dans un cas particulier dans lequel on soude deux tissus entre lesquels est interposé un non-tissé de rembourrage en polyester de 28 mm d'épaisseur ayant un volume spécifique avant écra-

sement de 350 cm$^3$/g et de comprimer le non-tissé jusqu'à ce que son volume spécifique soit compris entre 1 et 2 cm$^3$/g à l'endroit où l'on effectue le soudage par ultrasons. Ceci signifie que dans la zone de soudage, la densité de la matière est inférieure à celle du polyester, ce qui revient à dire que la structure de la soudure est aérée, que tous les filaments ne sont pas soudés ensemble. Il est mentionné dans ce brevet que si le volume spécifique est amené au-dessous de 1 cm$^3$/g, une fusion excessive se produit, accompagnée d'un affaiblissement de la soudure. Il s'agit dans ce cas d'une situation tout à fait spéciale où il est possible de jouer sur la capacité d'écrasement du non-tissé initialement de 28 mm d'épaisseur. Par contre, cette possibilité n'existe pas dans le cas de tissus surtout lorsqu'il s'agit de tissus fins de moins de 100 à 150 g/m$^3$.

Il existe également des brevets US 3 661 667, 3 867 232 et 3 331 719 et DOS 1953409 relatifs au soudage de matière thermoplastique en feuille.

Le brevet US 3 661 667 se rapporte au soudage de deux pellicules photographiques par le soudage d'une bande de papier intermédiaire dont une face est recouverte d'une couche de matière thermoplastique. La présence du papier permet de limiter la fusion à l'interface de cette couche de matière thermoplastique et du film également en une matière thermoplastique.

Le brevet US 3 867 232 se rapporte au soudage par ultrasons de pellicules photographiques dont au moins la surface est en une résine thermosplastique, à l'aide d'une sonotrode munie de saillies rectangulaires destinées à concentrer l'énergie. Une couche de Teflon (marque déposée) recouvre la sonotrode pour aider à concentrer l'énergie, pour garantir la séparation des extrémités de la sonotrode de la soudure et pour empêcher l'émulsion photographique de se déposer sur la sonotrode.

Le brevet US 3 331 719 se rapporte au soudage par ultrasons de rubans d'enregistrement magnétiques ou de films en interposant un ruban adhésif entre la sonotrode et le ruban adjacent, après quoi le ruban adhésif est décollé et le joint ainsi formé est régulier et résistant.

Enfin le DOS 1 953 409 se rapporte au soudage par ultrasons de feuilles de matière thermoplastiques d'épaisseur inférieure à 25 $\mu$

en interposant une feuille de papier entre la sonotrode et l'enclume et les feuilles à souder pour les maintenir au fur et à mesure de leur déplacement par rapport à la tête de soudage.

Le soudage de matière thermoplastique en feuille et celui de nappes de matière textile présentent des particularités assez différentes. Une feuille de matière thermoplastique a la même densité que celle de la matière fondue et elle est de ce fait non compressible. Par conséquent, le soudage intervient à l'interface des deux feuilles à souder et la pression pour amener ces faces en contact peut être relativement bien adaptée. Par conséquent, la soudure de telles feuilles ne pose pas les mêmes problèmes que celle du soudage de nappes textiles. Dans ce cas, les fibres ou filaments formant les nappes soit directement dans les non-tissés, soit sous forme de fils dans les étoffes tissées ou tricotées, doivent être suffisamment comprimés pour former une masse relativement compacte avant d'être soumis aux variations de pression ultrosoniques. On a vu que jusqu'ici, au-dessous d'une certaine pression, le soudage ne se produit pas ou très mal et que, lorsque la pression exercée sur les tissus est suffisante pour obtenir le soudage, on constate que la soudure est très fragile et que la rupture se produit essentiellement sur le bord de la zone soudée. C'est l'une des raisons pour lesquelles le soudage des nappes textiles s'effectue par petits points généralement répartis sur deux lignes parallèles adjacentes, de manière à augmenter au maximum la longueur du périmètre de soudage. L'autre raison de ce soudage par points vient de la nécessité de conserver l'élasticité du tissu. Malgré ces précautions, il n'est pas possible d'obtenir des soudures suffisamment résistantes surtout lorsque le tissu est fin et en particulier lorsqu'il est plus léger que 100 à 150 g/m$^2$.

L'examen microscopique des soudures de nappes textiles par ultrasons montre que la zone de soudage est extrêmement mince et très concentrée. On remarque une transition brusque entre une zone où la matière est complètement fondue et la structure textile qu'entoure cette zone. De ce fait, le nombre de fibres ou filaments des nappes qui sont effectivement reliés à la zone soudée est faible, de sorte que cette zone constitue une véritable amorce de rupture. L'extrême minceur de la zone dans laquelle la matière est fondue montre qu'une certaine partie de la matière prise entre l'enclume et la sonotrode est chassée latéralement de la zone de soudage consécutivement à la pression exercée et au chauffage.

Le but de la présente invention est d'améliorer la résistance des soudures de nappes textiles de manière à permettre de remplacer la couture des tissus formés au moins en partie de matière thermoplastique par le soudage.

A cet effet, l'invention a tout d'abord pour objet le soudage d'un matériau textile en nappe composé d'au moins 50% de fibres ou filaments thermoplastiques, ce soudage résultant d'un ramollissement localisé de la matière thermoplastique contenue dans chacune de ces nappes caractérisé par le fait que les portions soudées desdites nappes ont des masses représentant au moins 80% des masses initiales des portions correspondantes de ces nappes avant le soudage, que la résistance au cisaillement de ces portions soudées correspond à au moins 10% de la résistance à la traction du matériau testé dans le même sens et que la résistance au pelage correspond à au moins 5% de cette même résistance à la traction.

Cette invention a également pour objet un procédé de soudage de ce matériau textile, caractérisé par le fait que l'on presse les portions à souder dudit matériau l'une contre l'autre entre deux machoires de serrage par l'intermédiaire d'au moins une feuille interposée entre la machoire présentant la plus petite surface de serrage et ledit matériau textile et et l'on transmet des vibrations ultrasoniques à l'une de ces machoires.

La mise en oeuvre de ce procédé a été exécutée sur une machine Branson type 460 dont la puissance électrique est de 700 W, la fréquence de vibration de 20'000 Hz et l'amplitude de la sonotrode de 0,06 mm. L'enclume est formée de deux peignes adjacents de 50 mm de longueur chacun, à dents de section rectangulaires décalées les unes par rapport aux autres. Les dents de l'un des peignes ont des sections droites de 0,4 X 0,5 mm et celles de l'autre peigne des sections droites de 0,5 X 0,6 mm. La sonotrode présente une surface rectangulaire de 12 mm de largeur. Les dents des peignes et la sonotrode forment une paire de machoires entre lesquelles des nappes du matériau textile à souder sont serrées.

Une première série d'essais comparatifs a été réalisé sur un tricot polyamide pour bas de 60 g/m² et de 69 g/m² et 94 g/m² dans les parties renforcées du bas. Les essais ont été réalisés sur la partie renforcée de 69 g/m². Ce tricot a été soudé d'une part en serrant deux couches ou nappes entre l'enclume à double peigne et la sonotrode, d'autre part conformément au procédé selon l'invention, c'est-à-dire, en interposant une feuille de papier entre chaque nappe de tricot et la sonotrode, respectivement l'enclume. Dans chaque cas on a adapté la puissance de soudage afin d'obtenir les meilleures propriétés mécaniques possibles de la soudure. Ces essais préliminaires ont permis de fixer les conditions suivantes pour le soudage avec et sans interposition de feuilles de papier.

### Tableau I

| Soudage | Pression Kg/mm² | Durée d'application des ultrasons (s) | Durée de serrage après ultrasons (s) |
|---|---|---|---|
| Avec papier | 0,9 | 0,2 | 0,2 |
| Sans papier | 1,6 | 0,4 | 0,2 |

Cette série d'essais a montré de façon parfaitement répétitive que la résistance des soudures réalisées avec interposition de papier est très nettement supérieure que celles réalisées sans papier. En outre le mode de rupture est sensiblement différent entre les deux types de soudure. Contrairement à ce qu'on a déjà indiqué pour la soudure sans papier, celle avec papier ne se rompt pas autour de la zone de soudage.

Des observations faites sur des coupes, au microscope à lumière polarisante ont montré que la soudure avec papier forme une zone de pression plus étendue à la fois en épaisseur et en largeur que la zone de fusion obtenue sans papier. Un plus grand nombre de fibres est englobé dans les zones de soudage améliorant la résistance entre le tissu et les zones de soudage. L'augmentation de l'épaisseur de la soudure provient évidemment de la pression plus faible nécessaire au soudage avec papier. Il faut mentionner ici que les essais réalisés pour souder sans papier avec une pression réduite, ont donné de très mauvais résultats, même en allongeant le temps de soudage. Les feuilles de papier provoquent apparemment une répartition de la pression mécanique exercée par la sonotrode et vraissem- blablement un agrandissement de la zone affectée par l'énergie ultrasonique. Toutefois, le rôle d'isolant thermique joué par le papier a sans aucun doute son importance, sans quoi la réduction notable d'énergie nécessaire au soudage avec interposition de papier serait difficilement explicable. On constate qu'avec le même appareil, c'est-à-dire la même puissance électrique, la même fréquence et la même amplitude, il faut deux fois moins de temps et une pression presque deux fois plus faible pour souder avec papier que sans papier.

Le rôle de l'isolant thermique a été mis en évidence en effectuant une série d'essais en remplaçant les feuilles de papier par des feuilles d'aluminium. Ces essais ont montré qu'en modifiant aussi bien les pressions que les durées d'application des ultrasons, il est impossible de souder deux nappes de tissu dans ces conditions. La soudure ne se forme pas et en augmentant l'énergie on arrive à percer les nappes de tissu sans les souder. On peut admettre que cet essai est une démonstration du rôle que l'isolation thermique joue dans ce procédé. En effet, si la présence d'une feuille n'avait qu'un rôle mécanique, on ne voit pas pourquoi la feuille d'aluminium ne produirait pas le même effet. Par contre on comprend très bien que l'impossibilité de réaliser une soudure dans ces conditions provient de la dissipation de chaleur accrue due à la présence des feuilles d'aluminium qui jouent le rôle d'ailettes augmentant la surface de transfert avec l'atmosphère.

Des essais ont été faits avec différentes feuilles de papier plus ou moins épaisses et ont permis d'obtenir des résultats assez comparables. On a aussi constaté des résultats positifs avec une feuille de papier buvard entre les peignes de l'enclume et les nappes textiles à souder.

Une seconde série d'essais a été réalisée avec un tissu de parapluie en polyamide réalisés en fils à multifilaments, de 74 g/m$^2$. Comme précédemment, il s'agit d'essais comparatifs entre des soudures réalisées avec inerposition de feuilles de papier entre la sonotrode respectivement l'enclume et les nappes de tissu à souder et sans feuilles de papier intermédiaires. Le réglage de l'appareil pour l'obtention des meilleures propriétés mécaniques de soudage dans les deux cas correspond aux valeurs indiquées dans le tableau suivant:

Tableau II

| Soudage | Pression Kg/mm$^2$ | Durée d'application des ultra-sons (s) | Durée de serrage après ultrasons (s) |
|---|---|---|---|
| Avec papier | 1,4 | 0,2 | 0,2 |
| Sans papier | 2,0 | 0,2 | 0,2 |

Ces essais ont donné des résultats tout à fait comparables à ceux de la première série, c'est-à-dire que le soudage réalisé avec papier a une résistance mécanique très supérieure au soudage réalisé sans papier. Les examens microscopiques des soudures ont révélé les mêmes différences que celles mentionnées au sujet du tricot soudé, à savoir une zone de fusion plus épaisse, et plus large. Il est remarquable également qu'en général, la surface de la soudure avec papier laisse apparaître dans la zone fondue une trace des fibres ou des filaments textiles initiaux, tandis que la zone fondue sans papier a une apparence quasi vitreuse. Cette différence est également bien visible sur les coupes des soudures observées au microscope à lumière polarisante.

On a procédé à des tests de résistance mécanique à l'aide des deux séries de soudages réalisés avec et sans papier sur le tricot respectivement sur le tissu sus-mentionné. Les échantillons soumis à ces tests ont été coupés à 2 cm de largeur et ont été soumis à la résistance de la soudure au cisaillement d'une part et au pelage d'autre part. Ces essais ont tous été réalisés statistiquement sur plusieurs échantillons et les résultats obtenus ont été comparés à la résistance à la traction du tissu prise dans la même direction par rapport aux fils de chaîne et de trame du tissu que la direction dans laquelle les soudures ont été testées. C'est ainsi que si le soudage a été réalisé dans la direction de la trame, les tests ont été réalisés perpendiculairement à la ligne de soudage, c'est-à-dire dans la direction de la chaîne et le tissu a été lui aussi testé dans la même direction. En effet la résistance du tissu varie suivant la direction dans laquelle on exerce l'effort de traction par rapport aux fils. Le tableau III ci-dessous donne les résultats. La seconde partie de ce tableau donne le nombre d'échantillons n testés la valeur moyenne X de chaque série de tests, l'écart type δ et le pourcentage en-

tre les valeurs moyennes respectives et les valeurs moyennes relevées sur le tissu lui-même.

Tableau III

|  | Tissus | | | | Tricot | | | |  |
|---|---|---|---|---|---|---|---|---|---|
|  | Tissu seul | Soudage cisaillement | | Soudage pelage | | Tricot seul | Soudage cisaillement | | Soudage pelage | |
| Papier | | avec | sans | avec | sans | | avec | sans | avec | sans |
|  | kg/cm | kg/cm | kg/cm | kg/cm | kg/cm | kg/cm | kg/cm | kg/cm | kg/cm | kg/cm |
|  | 13,7 | 2,16 | 0,96 | 0,94 | 0,20 | 1,82 | 0,94 | 0,06 | 0,64 | 0,06 |
|  | 15,5 | 2,00 | 0,88 | 0,96 | 0,11 | 2,32 | 0,84 | 0,08 | 0,80 | 0,09 |
|  | 14,8 | 2,16 | 0,84 | 0,94 | 0,14 | 2,30 | 0,96 | 0,08 | 0,74 | 0,05 |
|  | 14,5 | 2,02 | 1,18 | 0,79 | 0,16 | 2,42 | 0,74 | 0,08 | 0,86 | 0,05 |
|  | 13,9 | 1,76 | 0,74 | 1,02 | 0,09 | 2,06 | 0,76 | 0,09 | 0,58 | 0,06 |
|  | 14,0 | 1,82 | 0,90 | 0,98 | 0,22 | 2,60 | 0,74 | 0,10 | 0,60 | 0,03 |
|  | 13,6 | 1,90 | 0,86 | 1,00 | 0,20 | 2,84 | 0,74 | 0,11 | 0,50 | 0,07 |
|  |  | 1,64 | 0,80 | 0,98 | 0,14 |  | 0,58 | 0,08 | 0,48 | 0,06 |
|  |  | 1,84 | 1,02 | 0,96 | 0,16 |  | 0,70 | 0,12 | 0,56 | 0,08 |
|  |  | 1,62 | 0,84 | 0,94 | 0,22 |  | 0,66 | 0,10 | 0,60 | 0,08 |
|  |  | 1,44 |  | 0,86 |  |  | 0,66 | 0,10 | 0,54 | 0,09 |
|  |  |  |  |  |  |  | 0,76 | 0,08 | 0,64 | 0,11 |
| n | 7 | 11 | 10 | 11 | 10 | 7 | 12 | 12 | 12 | 12 |
| x | 14,3 | 1,85 | 0,90 | 0,99 | 0,17 | 2,33 | 0,75 | 0,09 | 0,63 | 0,07 |
| $\partial$ | | 0,68 | 0,23 | 0,12 | 0,07 | 0,05 | 0,33 | 0,11 | 0,02 | 0,11 | 0,02 |
| % | 100 | 13 | 6 | 7 | 1 | 100 | 32 | 4 | 27 | 3 |

Ces résultats nécessitent quelques commentaires. On remarque, en comparant les pourcentages, que la résistance du soudage réalisé selon le procédé objet de l'invention est multipliée par plus de deux et jusqu'à huit fois ce qui est considérable. On constate que les pourcentages sont très variables suivant qu'il s'agit du tissu ou du tricot. A ce sujet, il faut tenir compte du fait que la résistance à la traction du tissu est environ six fois plus élevée que celle du tricot. De ce fait et même si les pourcentages paraissent faibles dans le cas du tissu, la résistance est de l'ordre du double en valeur absolue que celle du tricot. Par conséquent, ces résultats montrent que le soudage réalisé selon l'invention donne des valeurs industriellement valables.

On a déjà mentionné le fait que les soudures réalisées avec interposition de feuilles de papier sont sensiblement plus épaisses que celles réalisées sans papier. Outre le fait que la fusion est plus prononcée dans les soudures sans papier, on constate sur les coupes observées au microscope que sous l'effet des vibrations et de la pression, la matière fondue semble refluer du centre vers la périphérie de la zone de soudage, de sorte que la soudure s'apparente à un prédécoupage.

Une série de tests a été mise en oeuvre pour évaluer la réduction de la masse de matière dans la zone de fusion en la comparant à la masse correspondante de tissu, ceci dans le cas du soudage avec et sans papier. Compte tenu de la difficulté de découper à l'intérieur des zones de soudages de l'ordre de 0,2 à 0,3 mm$^2$ réalisées lors des essais précédents, on a augmenté la surface des zones en formant trois zones circulaires de 3 mm de diamètre chacune, séparées de 2 mm les unes des autres. On a procédé à une série de réglages pour adapter les paramètres de soudage à ces nouvelles conditions, jusqu'à ce que l'on obtienne le meilleur soudage dans un cas comme dans l'autre. Ensuite on a procédé à une série de soudage et on a découpé des rondelles de matière au centre de la zone fondue à l'aide d'un poinçon de 1,5 mm de diamètre intérieur. Le soudage a été réalisé dans le tissu de 74 g/m$^2$ et dans la partie renforcée du tricot de 94 g/m$^2$. La masse de ces tissus en double épaisseur et d'un diamètre de 1,5 mm est de 260 $\mu$g pour le tissu et de 330 $\mu$g pour le tricot. Le tableau IV ci-dessous donne les résultats de ces tests ainsi que leur nombre n, le calcul des moyennes X, l'écart type et l'écart en % par rapport à la masse correspondante de deux nappes de tissu.

Tableau IV

| | Tissus | | Tricot | |
| | Masse Soudure (μg) | | Masse Soudure (μg) | |
| | Avec papier | Sans papier | Avec papier | Sans papier |
| --- | --- | --- | --- | --- |
| | 267 | 225 | 259 | 164 |
| | 262 | 209 | 269 | 190 |
| | 272 | 190 | 261 | 192 |
| | 233 | 174 | 284 | 183 |
| | 239 | 177 | 265 | 195 |
| | 240 | 182 | 248 | 199 |
| | 259 | | 337 | 220 |
| | 253 | | 315 | 245 |
| | 280 | | 328 | 229 |
| | | | 303 | 238 |
| | | | 348 | 236 |
| | | | 338 | 228 |
| | | | 266 | 238 |
| | | | 255 | 267 |
| | | | 366 | |
| | | | 363 | |
| | | | 365 | |
| Nombre (n) | 9 | 6 | 17 | 14 |
| Moyenne (X) | 256 | 193 | 303 | 218 |
| Ecart ($\partial$) | 16 | 20 | 42 | 28 |
| % | 98 | 74 | 92 | 66 |

On constate dans le cas du tissu comme dans celui du tricot une nette réduction de masse de la zone de fusion dans le cas du soudage sans papier, respectivement 26% et 34% tandis que, le soudage avec papier ne révèle qu'une diminution de masse négligeable respectivement 2% et 8%. Même en prenant les échantillons un à un au lieu de leur moyenne, on constate une nette distinction entre les deux types de soudage qui se situe à environ 80%-85% de la masse initiale.

## R E V E N D I C A T I O N S

1. Soudage d'un matériau textile en nappe, composé d'au moins 50% des fibres ou filaments thermoplastiques, ce soudage résultant d'un ramollissement localisé de la matière thermoplastique contenue dans chacune de ces nappes caractérisé par le fait que les portions soudées desdites nappes ont une masse représentant au moins 80% des masses initiales des portions correspondantes de ces nappes avant le soudage, que la résistance au cisaillement de ces portions soudées correspond à au moins 10% de la résistance à la traction du matériau testé dans le même sens et que la résistance au pelage correspond à au moins 5% de cette même résistance à la traction.

2. Soudage selon la revendication 1, caractérisé par le fait que la masse dudit matériau textile soudé est inférieure à 150 g/m$^2$

3. Soudage selon la revendication 1 d'un matériau textile dont la résistance à la traction est inférieure à 3 kg/cm et la masse inférieure à 100 g/m$^2$, caractérisé par le fait que la résistance au cisaillement desdites zones soudées correspond à au moins 25% de ladite résistance à la traction et que la résistance au pelage correspond à au moins 20% de cette même résistance.

4. Soudage selon la revendication 1 d'un matériau textile dont la résistance à la traction est de l'ordre de 15 kg/cm et la masse inférieure à 100 g/m$^2$, caractérisé par le fait que ladite résistance au cisaillement correspond à au moins 12% et que ladite résistance au pelage correspond à au moins 6%.

5. Soudage selon la revendication 1, caractérisé par le fait que ladite résistance au cisaillement est comprise entre 0,6 et 2 kg/cm et que la résistance au pelage est comprise entre 0,5 et 1 kg/cm.

6. Procédé de soudage du matériau textile selon la revendication 1, caractérisé par le fait que l'on presse les portions à souder dudit matériau l'une contre l'autre entre deux machoires de serrage par l'intermédiaire d'au moins une feuille interposée entre la machoire présentant la plus petite surface de serrage et ledit matériau textile et l'on transmet des vibrations ultrasoniques à l'une de ces machoires.

7. Procédé selon la revendication 6, caractérisé par le fait que l'on interpose deux feuilles entre une enclume, respectivement une sonotrode de soudage et les nappes dudit matériau à souder.

8. Procédé selon la revendication 6, caractérisé par le fait que ladite feuille est en un matériau thermiquement isolant.

9. Procédé selon la revendication 8, caractérisé par le fait que ladite feuille est en un matériau non fusible.

10. Procédé selon la revendication 6, caractérisé par le fait que l'on exerce sur les portions à souder dudit matériau une pression comprise entre 0,7 et 1,5 kg/mm$^2$, que l'on soumet ces portions à des vibrations ultrasoniques de 20 kHz et de 0,06 mm d'amplitude durant une période inférieure à 0,3 s.

**Office européen des brevets**

**RAPPORT DE RECHERCHE EUROPEENNE**

0015871

Numéro de la demande

EP 80 81 0062

## DOCUMENTS CONSIDERES COMME PERTINENTS

| Catégorie | Citation du document avec indication, en cas de besoin, des parties pertinentes | Revendication concernée |
|---|---|---|
| | US - A - 3 817 802 (R.W. MEYER)<br>* Colonne 3, lignes 20-75; colonnes 4-7; colonne 8, lignes 1-67; figures 1-19 *<br><br>-- | 1,6,7 |
| | BE - A - 672 993 (MULLER)<br>* Page 2, lignes 9-20; page 5, lignes 1-15; revendications 1,2,4; figure 1 *<br><br>-- | 1 |
| | US - A - 3 505 136 (J.G. ATTWOOD)<br>* Colonne 4, lignes 28-75; colonne 5, colonne 6, lignes 1-27; figures 1-4 *<br><br>-- | 6-9 |
| | DE - A - 1 953 409 (CENTRE NATIONAL D'ETUDES SPATIALES)<br>* Page 12, lignes 18-26; page 13, lignes 1-15; figure 7 *<br><br>-- | 6-9 |
| | US - A - 2 633 894 (P.B. CARWILE)<br>* Colonne 3, lignes 39-53; colonne 5, lignes 44-47; figure 1 *<br><br>-- | 6,7,9 |
| | US - A - 3 867 232 (EASTMAN KODAK COMP.)<br>* Colonne 1, lignes 44-67; colonnes 2,3, lignes 1-49; figures 1-3 *<br><br>-- | 6,7 |
| | US - A - 3 294 616 (S.G. LINSLEY) | 6,7 ./. |

**CLASSEMENT DE LA DEMANDE (Int. Cl. 3)**

B 29 C 27/08
A 41 D 27/24

**DOMAINES TECHNIQUES RECHERCHES (Int. Cl. 3)**

B 29 C 27/08
A 41 D 27/24

**CATEGORIE DES DOCUMENTS CITES**

X: particulièrement pertinent
A: arrière-plan technologique
O: divulgation non-écrite
P: document intercalaire
T: théorie ou principe à la base
  de l'invention
E: demande faisant interférence
D: document cité dans
  la demande
L: document cité pour d'autres
  raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 08-04-1980 | VAN THIELEN |

OEB Form 1503.1 06.78

Office européen
des brevets

**RAPPORT DE RECHERCHE EUROPEENNE**

EP 80 81 0062

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | * Colonne 5, lignes 7-75; colonne 6, lignes 1-69; figures 5-7 * <br><br> -- | | |
| A | FR - A - 2 267 870 (I.C.I.) <br><br> ---- | | |
| | | | **DOMAINES TECHNIQUES RECHERCHES (Int. Cl. ³)** |